# EUROPEAN PATENT SPECIFICATION

(11) **EP 3 467 986 B1**
(45) Date of publication and mention of the grant of the patent: **13.07.2022**
(21) Application number: 18154443.8
(22) Date of filing: 31.01.2018
(51) Int. Cl.: H02J 3/36, H02M 5/42, H02M 7/757

(54) **CONVERTER SCHEME**
KONVERTERSCHEMA
PLAN DE CONVERSION

(30) Priority: 06.10.2017 IN 201741035543
(43) Date of publication of application: 10.04.2019
(73) Proprietor: General Electric Technology GmbH, 5400 Baden (CH)
(72) Inventor: MUKHEDKAR, Radnya, Stafford, Staffordshire ST16 1WS (GB); OHEIDHIN, Gearoid, Stafford, Staffordshire ST16 1WS (GB); KUMAR, Amit, Noida (IN)
(74) Representative: Brevalex

(56) References cited:
- WO-A1-2007/084041
- WO-A1-2014/176726
- WO-A1-2016/174044

## Description

This invention relates to a converter scheme comprising a plurality of converters, preferably for use in high voltage direct current power transmission. It is known to coordinate the operations of a plurality of converters in a converter scheme. WO 2007/084041 A1 is an example of prior art document. According to a first aspect of the invention, there is provided a converter scheme comprising a plurality of converters, according to claim 1.

In use, each converter may be associated with a respective pole of the converter scheme.

The configuration of the converter scheme of the invention provides a controlled means of blocking and deblocking converters when changing the total power level of the converter scheme, which can be automated to minimise or eliminate the need for operator intervention in order to reduce the risk of maloperation. This in turn improves the efficiency and reliability of the converter scheme.

Also, the configuration of the converter scheme of the invention permits the staggering of the blocking and deblocking of converters in order to enable the smooth start-up and shut-down of multiple converters in a manner that minimises any adverse impact on associated electrical networks and enables smooth power regulation.

In addition the ability of the invention to control the redistribution of the total power level among the or each deblocked converter when changing the total power level of the converter scheme minimises or eliminates the risk of violating the operating parameters (e.g. pole to ground voltage rating, ground return current etc.) of the associated pole, e.g. the voltage/current rating/allowance of power transmission media connected to the converters.

Furthermore the ability of the invention to control the redistribution of the total power level among the or each deblocked converter when changing the total power level of the converter scheme enables optimisation of the power distribution between the converters in order to optimize the utilisation and operation of the converters to meet a wide range of requirements. Such requirements include, but are not limited to, converter losses, converter availability, converter life extension, reduced converter maintenance, and minimisation of the operation of associated equipment such as tap changers, switchgear, and filter switches. Furthermore the optimisation of the power distribution between the converters can be readily customised to fit customer requirements.

The invention provides a reliable means of controlling the distribution of the total power level of the converter scheme.

When the controller is further programmed to carry out the first mode during the first stage, the controller is programmed to increase an operating power of the or each further converter to a non-zero power level immediately after reconfiguring the or each further converter from a blocked state to a deblocked state during the first stage.

When the controller is further programmed to carry out the first mode during the first stage, the controller is programmed to operate the converter scheme at the first total power level during the first mode. This ensures that the operating power of the converter scheme is maintained at the first total power level during the first mode.

When the controller is further programmed to carry out the second mode during the second stage, the controller is programmed to decrease an operating power of the or each selected converter from the intermediate power level to a non-zero power level immediately before reconfiguring the or each selected converter from a deblocked state to a blocked state during the second stage.

When the controller is further programmed to carry out the second mode during the second stage, the controller is programmed to operate the converter scheme at the second total power level during the second mode. This ensures that the operating power of the converter scheme is maintained at the second total power level during the second mode.

The invention is able to remove or minimise any imbalance of power levels between the multiple converters.

This allows even distribution of the total power level between the multiple converters to minimise or remove the risk of violating the operating parameters (i.e. voltage and current) of the associated pole, and also allows distribution of the power levels between the multiple converters to minimise imbalance of power levels between converters associated with respective poles having opposite polarities.

It will be appreciated that, in other embodiments of the invention, the distribution of the total power level between multiple converters may be uneven. In such embodiments the distribution of the total power level between the multiple converters may be optimised in accordance with any number of requirements.

The controller is programmed in a preferred embodiment to coordinate respective power ramp rates of multiple converters configured in a deblocked state during the first stage so that the multiple deblocked converters simultaneously reach the intermediate power level.

Allowing one or more of the multiple converters to reach the intermediate power level earlier than one or more other of the multiple converters could result in at least one converter temporarily being at a higher power level. This not only results in an imbalance of power levels between the multiple converters but also increases the risk of at least one converter violating the voltage rating of the associated pole. The aforementioned coordination of the ramp rates to ensure that the multiple deblocked converters simultaneously reach the intermediate power level as soon as possible, advantageously minimises or removes this risk.

The controller, in a preferred embodiment, is programmed to coordinate respective power ramp rates of multiple converters configured in a deblocked state during the second stage so that the multiple deblocked converters simultaneously reach the second power level.

Allowing one or more of the multiple converters to reach the second power level earlier than one or more other of the multiple converters could result in at least one converter temporarily being at a higher power level. This not only results in an imbalance of power levels between the multiple converters but also increases the risk of at least one converter violating the voltage rating of the associated pole. The aforementioned coordination of the ramp rates to ensure that the multiple deblocked converters simultaneously reach the second power level advantageously minimises or removes this risk.

As claimed in claim 1, the invention is applicable to a wide range of converter schemes based on a plurality of converters. The converter scheme includes at least one of:
- at least one set of parallel-connected converters;
- a bipolar converter arrangement, which may include a return path in the form of, e.g. a metallic return or an electrode line;
- a multi-terminal converter arrangement.

According to claim 8 being a second aspect of the invention, there is provided a method of operating a converter scheme.

The advantages of the converter scheme of the first aspect of the invention and its embodiments apply mutatis mutandis to the method of the second aspect of the invention and its embodiments.

In the method of the invention, as claimed in claim 8, the converter scheme includes at least one of:
- at least one set of parallel-connected converters;
- a bipolar converter arrangement, which may include a return path in the form of, e.g. a metallic return or an electrode line;
- a multi-terminal converter arrangement.

It will be appreciated that the use of the terms "first" and "second", and the like, in this patent specification is merely intended to distinguish between similar features (e.g. the first and second stages, the first and second modes), and is not intended to indicate the relative importance of one feature over another feature, unless otherwise specified.

Preferred embodiments of the invention will now be described, by way of nonlimiting examples, with reference to the accompanying drawings in which:
Figure 1 shows schematically a converter scheme according to a first embodiment of the invention;
Figure 2 shows schematically an exemplary converter of the converter scheme of Figure 1;
Figure 3 illustrates graphically an exemplary operation of the converter scheme of Figure 1;
Figures 4a and 4b show schematically a converter scheme according to a second embodiment of the invention; and
Figures 5 and 6 illustrate graphically exemplary operations of the converter scheme of Figures 4a and 4b.

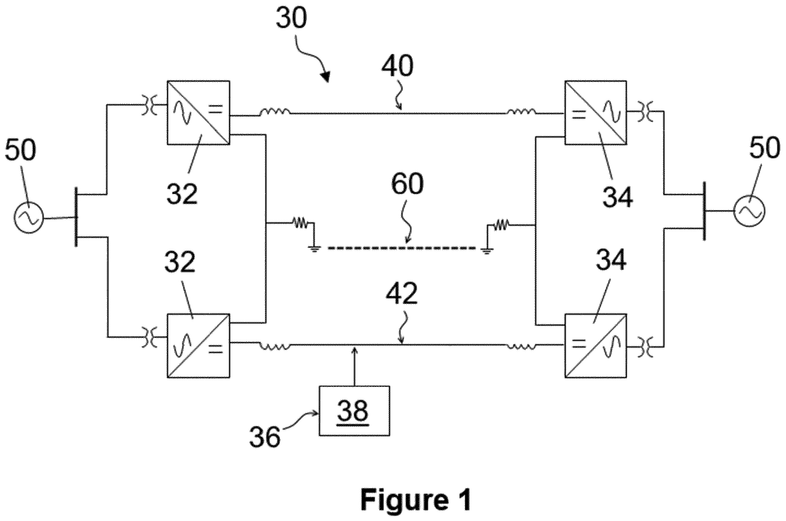

A bipole converter scheme according to a first embodiment of the invention is shown in Figure 1 and is designated generally by the reference numeral 30.

The bipole converter scheme 30 comprises first and second DC poles, a plurality of first converters 32, a plurality of second converters 34, and a controller 36.

For the purposes of simplicity, the bipole converter scheme 30 of Figure 1 is described with reference to a controller 36 based on a single control unit 38. The configuration of the controller 36 may vary depending on specific requirements of the bipole converter scheme 30. For example, the controller 36 may include a global control unit for controlling a plurality of converters 32,34, at least one local control unit for controlling at least one converter 32,34, or a combination thereof. The global control unit may be located remotely from each converter 32,34 and may be configured to communicate with each converter 32,34 via telecommunications links. The or each local control unit may be located in the vicinity of at least one converter 32,34. The global control unit may be configured to communicate with at least one local control unit via telecommunications links.

The first DC pole includes a first DC power transmission line 40 extending between first and second ends. The second DC pole includes a second DC power transmission line 42 extending between first and second ends.

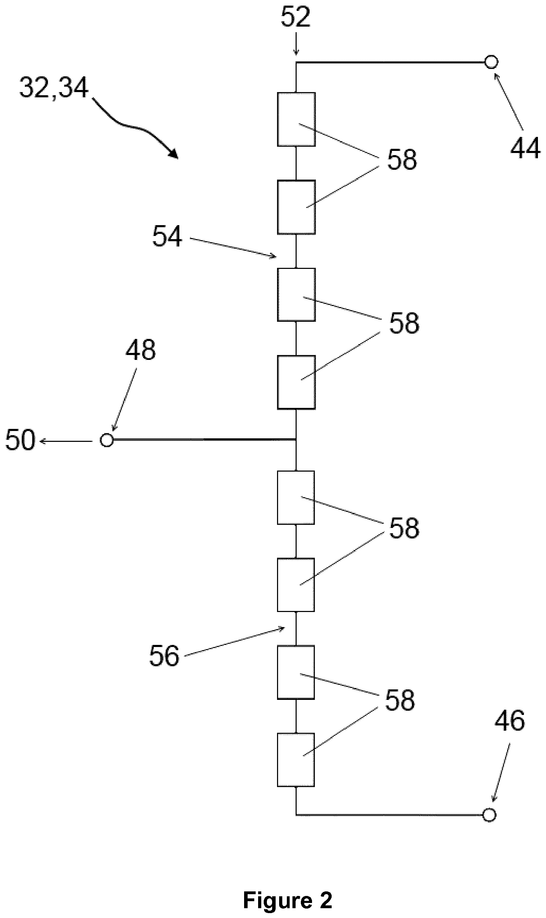

Each converter 32,34 includes a first DC terminal 44 and a second DC terminal 46. In addition each converter 32,34 shown in Figure 1 includes a plurality of AC terminals 48, each of which in use is connected to a respective phase of a respective multi-phase AC network 50. More particularly, each converter 32,34 shown in Figure 1 defines an AC/DC voltage source converter 32,34 which includes a plurality of converter limbs 52, each of which is arranged as shown in Figure 2. In other embodiments, it is envisaged that each voltage source converter 32,34 may be replaced by a line commutated converter.

Each converter limb 52 extends between the first and second DC terminals 44,46, and includes a first limb portion 54 that extends between the first DC terminal 44 and the AC terminal 48, and a second limb portion 56 which extends between the second DC terminal 46 and the AC terminal 48.

Each limb portion 56,58 includes a plurality of series-connected modules 58 to define a chain-link converter. In the specific embodiment shown, each module 58 includes a pair of switching elements that are connected in parallel with a capacitor in a half-bridge arrangement to define a 2-quadrant unipolar module 58 that can provide zero or positive voltages and can conduct current in two directions.

Each switching element constitutes an insulated gate bipolar transistor (IGBT), which is connected in parallel with an anti-parallel passive current check element in the form of a diode.

It is envisaged that, in other embodiments of the invention, the IGBT may be replaced by one or more other semiconductor switches, the diode may be replaced by another type of passive current check element that limits current flow to only one direction, and/or each capacitor may be replaced by another type of energy storage device that is capable of storing and releasing energy to provide a voltage, e.g. a fuel cell or battery. It is further envisaged that, in other embodiments of the invention, the plurality of series-connected modules in each limb portion 56,58 may be replaced by one or more switching elements.

It will be appreciated that the topology of each converter 32,34 is merely chosen to help illustrate the operation of the invention, and that each converter 32,34 may be replaced by another converter with a different topology.

The first end of the first DC power transmission line 40 is operatively connected to the first DC terminal 44 of one of the plurality of first converters 32, and the second end of the first DC power transmission line 40 is operatively connected to the first DC terminal 44 of one of the plurality of second converters 34. The first end of the second DC power transmission line 42 is operatively connected to the first DC terminal 44 of another of the plurality of first converters 32, and the second end of the second DC power transmission line 42 is operatively connected to the first DC terminal 44 of another of the plurality of second converters 34.

The second DC terminals 46 of the plurality of first converters 32 are operatively connected via a high impedance current return path 60 to the second DC terminals 46 of the plurality of second converters 34. The current return path 60 may be an electrode line or a metallic return, and may include one conductor or multiple conductors. It will be appreciated that the current return path 60 may be a low impedance current return path.

The controller 36 is programmed to control the switching of the switching elements of the modules 58 of each converter 32,34 in order to operate each module 58 to selectively provide a voltage source. Also, the controller 36 is programmed to selectively control the switching of the switching elements of the modules 58 to configure each converter 32,34 to change between blocked and deblocked states.

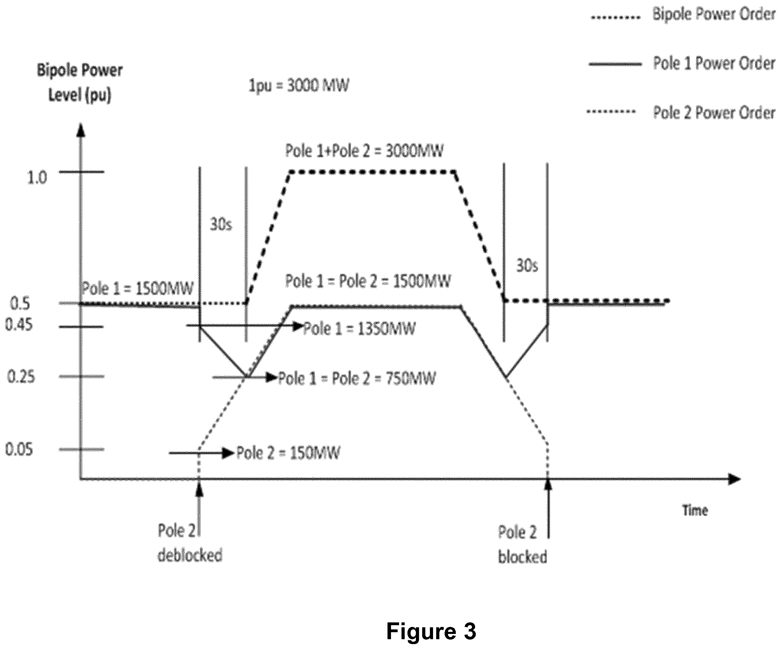

An exemplary operation of the bipole converter scheme 30 is described as follows with reference to Figure 3.

At first the controller 36 controls the switching of the switching elements of the modules 58 of each first converter 32,34 to operate the bipole converter scheme 30 at a total power level of 1500MW. More particularly, each of the first and second converters 32,34 connected to the first DC power transmission line is in a deblocked state and its operating power is set so that the first DC pole is at a power level of 1500W, while each of the first and second converters 32,34 connected to the second DC power transmission line 40 is in a blocked state. The bipole converter scheme 30 transmits 1500MW of power along the first DC power transmission line 40.

When the bipole converter scheme 30 is required to subsequently reconfigure converters from a blocked state to a de-blocked state, the controller carries a two-stage converter scheme reconfiguration as follows.

A first stage of the converter scheme reconfiguration initially involves deblocking the blocked first and second converters 32,34 and instantaneously increasing an operating power of the newly deblocked first and second converters 32,34 so that the second DC pole is at a power level of 150MW. Meanwhile the operating power of the bipole converter scheme 30 is maintained at the total power level of 1500MW, which means that the operating power of the originally deblocked first and second converters 32,34 and the power level of the first DC pole drop to 1350MW.

Thereafter, the first stage involves decreasing the operating power of the originally deblocked first and second converters 32,34 from its present power level to an intermediate power level of 750 MW, and increasing an operating power of the newly deblocked first and second converters 32,34 from its present power level to the intermediate power level with the fastest ramp rate possible to minimise the risk of operating parameter violation. In this manner the total power level of the bipole converter scheme 30 is redistributed evenly among the deblocked converters 32 at the intermediate power level.

When modifying the operating powers of the first converters 32 to the intermediate power level, the controller 36 coordinates respective power ramp rates of the deblocked first and second converters 32,34 so that the deblocked first and second converters 32,34 simultaneously reach the intermediate power level while maintaining the operating power of the bipole converter scheme 30 at the total power level of 1500MW. Such coordination of the respective power ramp rates of the deblocked first and second converters 32,34 is preferably carried out in accordance with the permitted power ramp rate, the intermediate power level, and the number of originally deblocked converters. The permitted power ramp rate may be restricted by system power ramp rate capability and the operation of associated equipment such as tap changers.

This is followed by a second stage of the converter scheme reconfiguration which involves calculating the power order for each deblocked first and second converter 32,34 based on the target total power level of 3000MW and on converter power capability, before increasing the operating power of each deblocked first and second converter 32,34 from the intermediate power level to a power level of 1500MW such that the total power level of the bipole converter scheme 30 is increased to 3000MW. This results in each DC pole having a power level of 1500MW.

When increasing the operating power of each converter 32,34 to the power level of 1500MW, the controller 36 coordinates respective power ramp rates of the deblocked first and second converters 32,34 so that the deblocked first and second converters 32,34 simultaneously reach the power level of 1500MW. Such coordination of the respective power ramp rates of the deblocked first and second converters 32,34 is preferably carried out in accordance with the permitted power ramp rate, the number of converters, and converter power capability.

When the bipole converter scheme 30 is required to subsequently reconfigure converters from a de-blocked state to a blocked state, the controller carries a two-stage converter scheme reconfiguration as follows.

A first stage of the converter scheme reconfiguration initially involves decreasing the operating power of each of the deblocked first and second converters 32,34 from its present power level to an intermediate power level of 750MW such that the total power level of the bipole converter scheme 30 is decreased to 1500MW.

When decreasing the operating powers of the first and second converters 32,34 to the intermediate power level, the controller 36 coordinates respective power ramp rates of the deblocked first and second converters 32,34 so that the deblocked first and second converters 32,34 simultaneously reach the intermediate power level. Such coordination of the respective power ramp rates of the deblocked first and second converters 32,34 is preferably carried out in accordance with the permitted power ramp rate, the number of converters, and the intermediate power level.

This is followed by a second stage of the converter scheme reconfiguration which involves increasing the operating power of the first and second converters 32,34 connected to the first DC power transmission line 40 from the intermediate power level to a power level of 1350MW and decreasing the operating power of the first and second converters 32,34 connected to the second DC power transmission line 42 from the intermediate power level to a power level of 150MW.

When modifying the operating powers of the first and second converters 32,34 from the intermediate power level, the controller 36 coordinates respective power ramp rates of the deblocked first and second converters 32,34 so that the deblocked first and second converters 32,34 simultaneously reach the respective target power levels while maintaining the operating power of the bipole converter scheme 30 at the total power level of 1500MW. Such coordination of the respective power ramp rates of the deblocked first and second converters 32,34 is preferably carried out in accordance with the permitted power ramp rate and the number of deblocked converters.

Thereafter, the second stage involves blocking the first and second converters 32,34 connected to the second DC power transmission line 42. Since the controller 36 maintains the operating power of the bipole converter scheme 30 at the total power level of 1500MW, the total power level of 1500MW is redistributed to the remaining deblocked first and second converters 32,34 connected to the first DC power transmission line 40. This results in the first DC pole having a power level of 1500MW.

The above sequence of the bipole converter scheme 30 can be automated to permit its performance through a single trigger, e.g. by pressing a single initiation button. This advantageously eliminates the need for operator intervention and thereby reduces the risk of maloperation, thus improving the efficiency and reliability of the bipole converter scheme 30.

The above sequence of the bipole converter scheme 30 permits the staggering of the blocking and deblocking of converters in order to enable the smooth start-up and shut-down of multiple converters in a manner that minimises any adverse impact on the associated AC networks 50 and enables smooth power regulation in the bipole converter scheme 30.

The redistribution of the total power level among the or each deblocked converter 32,34 when changing the total power level of the bipole converter scheme 30 not only minimises or eliminates the risk of violating the operating parameters of each DC pole but also enables optimisation of the power distribution between the converters 32,34 in order to optimize the utilisation and operation of the converters 32,34 to meet a wide range of requirements. Such requirements include, but are not limited to, converter losses, converter availability, converter life extension, reduced converter maintenance, and minimisation of the operation of associated equipment such as tap changers, switchgear, and filter switches.

The coordination of the respective power ramp rates of the deblocked first and second converters 32,34 is preferably carried out to minimise the duration during which the operating powers of the deblocked first and second converters 32,34 are ramped. This is to minimise the risk of one DC pole temporarily being at a higher power level than the other DC pole, which runs the risk of unbalance and violation of operating parameters.

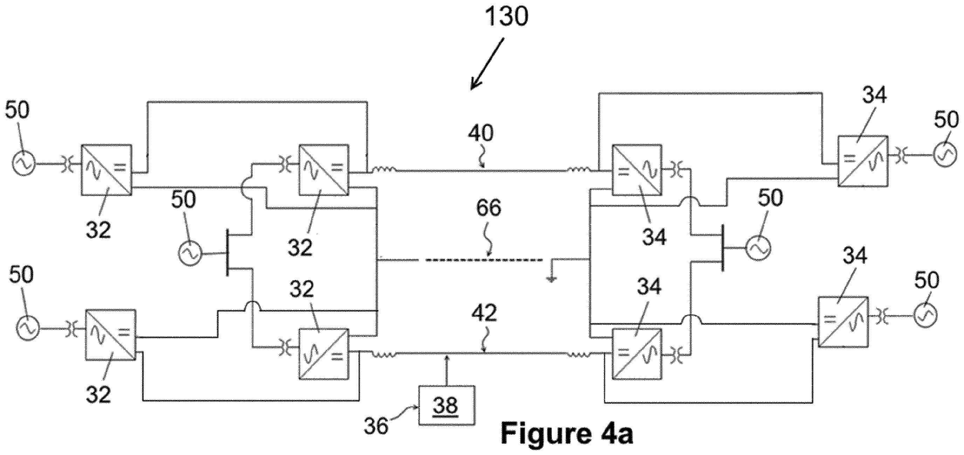

A bipole converter scheme according to a second embodiment of the invention is shown in Figure 4a and is designated generally by the reference numeral 130. The bipolar converter scheme 130 of Figure 4a is similar in structure and operation to the bipolar converter scheme 30 of Figure 1, and like features share the same reference numerals.

The bipole converter scheme 130 of Figure 4a differs from the bipole converter scheme 30 of Figure 1 in that the bipole converter scheme 130 comprises first, second, third and fourth DC poles P1, P2, P3, P4.

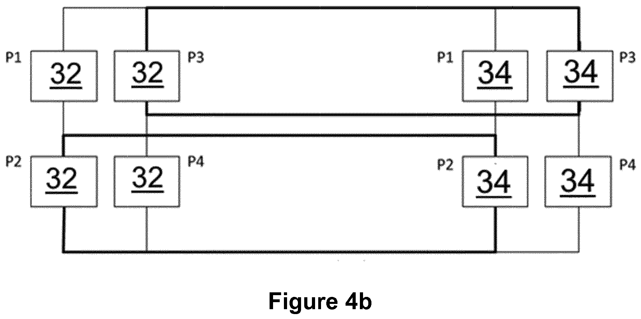

For the purposes of simplicity, the bipole converter scheme 130 of Figure 4 is described with reference to a controller 36 based on a single control unit 38. The configuration of the controller 36 may vary depending on specific requirements of the bipole converter scheme 30. For example, the controller 36 may include a global control unit for controlling a plurality of converters 32,34, at least one local control unit for controlling at least one converter 32,34, or a combination thereof. The global control unit may be located remotely from each converter 32,34 and may be configured to communicate with each converter 32,34 via telecommunications links. The or each local control unit may be located in the vicinity of at least one converter 32,34. The global control unit may be configured to communicate with at least one local control unit via telecommunications links.

Figure 4b illustrates the association of the converters 32,34 with the first, second, third and fourth DC poles P1, P2, P3, P4 of the bipole converter scheme 130. The first DC pole P1 is associated with one of the first parallel-connected pair of the plurality of first converters 32 and one of the first parallel-connected pair of the plurality of second converters 34. The second DC pole P2 is associated with one of the second parallel-connected pair of the plurality of first converters 32 and one of the second parallel-connected pair of the plurality of second converters 34. The third DC pole P3 is associated with the other of the first parallel-connected pair of the plurality of first converters 32 and the other of the first parallel-connected pair of the plurality of second converters 34. The fourth DC pole P4 is associated with the other of the second parallel-connected pair of the plurality of first converters 32 and the other of the second parallel-connected pair of the plurality of second converters 34.

The first and third DC poles P1, P3 includes a first DC power transmission line 40 extending between first and second ends. The second and fourth DC poles P2,P4 includes a second DC power transmission line 42 extending between first and second ends.

Each converter 32,34 includes a first DC terminal 44 and a second DC terminal 46. In addition each converter 32,34 shown in Figure 4 includes a plurality of AC terminals 48, each of which in use is connected to a respective phase of a respective multi-phase AC network 50. More particularly, each converter 32,34 shown in Figure 4 defines an AC/DC voltage source converter 32,34 which includes a plurality of converter limbs 52, each of which is arranged as shown in Figure 2. In other embodiments, it is envisaged that each voltage source converter 32,34 may be replaced by a line commutated converter.

Each converter limb 52 extends between the first and second DC terminals 44,46, and includes a first limb portion 54 that extends between the first DC terminal 44 and the AC terminal 48, and a second limb portion 56 which extends between the second DC terminal 46 and the AC terminal 48.

Each limb portion 56,58 includes a plurality of series-connected modules 58 to define a chain-link converter. In the specific embodiment shown, each module 58 includes a pair of switching elements that are connected in parallel with a capacitor in a half-bridge arrangement to define a 2-quadrant unipolar module 58 that can provide zero or positive voltages and can conduct current in two directions.

Each switching element constitutes an insulated gate bipolar transistor (IGBT), which is connected in parallel with an anti-parallel passive current check element in the form of a diode.

It is envisaged that, in other embodiments of the invention, the IGBT may be replaced by one or more other semiconductor switches, the diode may be replaced by another type of passive current check element that limits current flow to only one direction, and/or each capacitor may be replaced by another type of energy storage device that is capable of storing and releasing energy to provide a voltage, e.g. a fuel cell or battery. It is further envisaged that, in other embodiments of the invention, the plurality of series-connected modules in each limb portion 56,58 may be replaced by one or more switching elements.

It will be appreciated that the topology of each converter 32,34 is merely chosen to help illustrate the operation of the invention, and that each converter 32,34 may be replaced by another converter with a different topology.

The first end of the first DC power transmission line 40 is operatively connected to the first DC terminal 44 of a first parallel-connected pair of the plurality of first converters 32, and the second end of the first DC power transmission line 40 is operatively connected to the first DC terminal 44 of a first parallel-connected pair of the plurality of second converters 34. The first end of the second DC power transmission line 42 is operatively connected to the first DC terminal 44 of a second parallel-connected pair of the plurality of first converters 32, and the second end of the second DC power transmission line 42 is operatively connected to the first DC terminal 44 of a second parallel-connected pair of the plurality of second converters 34.

The second DC terminals 46 of the plurality of first converters 32 are operatively connected via a high impedance current return path 60 to the second DC terminals 46 of the plurality of second converters 34. The current return path 60 may be an electrode line or a metallic return, and may include one conductor or multiple conductors. It will be appreciated that the current return path 60 may be a low impedance current return path.

The controller 36 is programmed to control the switching of the switching elements of the modules 58 of each converter 32,34 in order to operate each module 58 to selectively provide a voltage source. Also, the controller 36 is programmed to selectively control the switching of the switching elements of the modules 58 to configure each converter 32,34 to change between blocked and deblocked states.

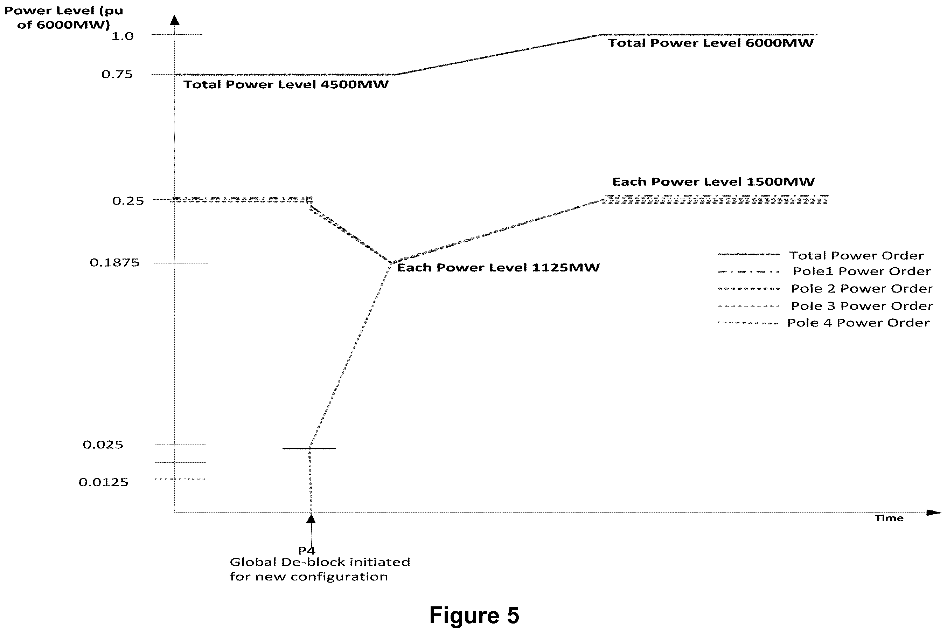

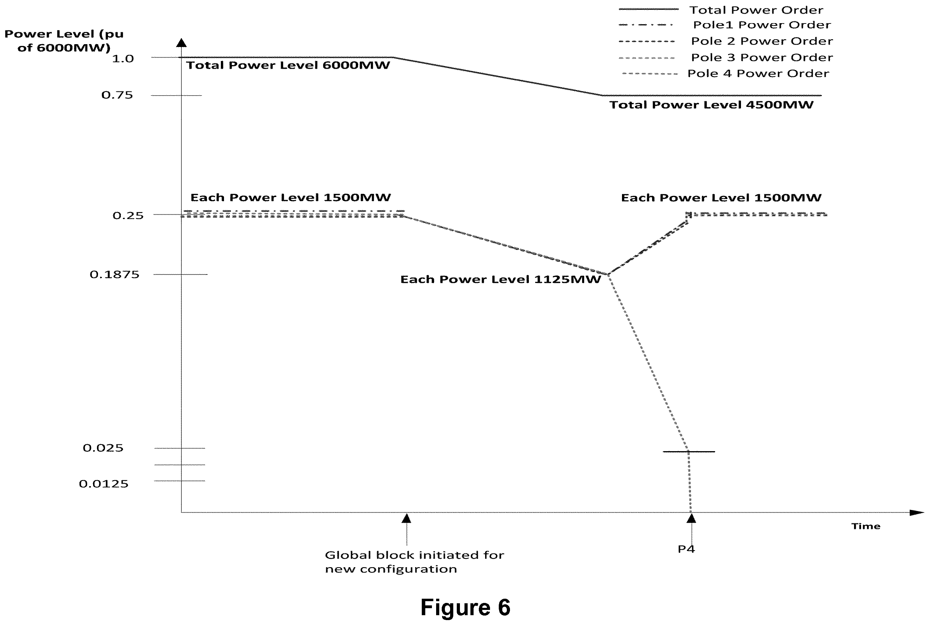

An exemplary operation of the bipole converter scheme 130 is described as follows with reference to Figure 5 and 6.

At first the controller 36 controls the switching of the switching elements of the modules 58 of the converters associated with the first, second and third DC poles P1, P2, P3 to operate the bipole converter scheme 130 at a total power level of 4500MW. More particularly, each of the first and second converters 32,34 associated with the first, second and third DC poles P1, P2, P3 is in a deblocked state and its operating power is set at a power level of 1500W, while each of the first and second converters 32 associated with the fourth pole P4 is in a blocked state. The bipole converter scheme 130 transmits 3000MW of power along the first DC power transmission line 40 and transmits 1500MW of power along the second DC power transmission line 42.

When the bipole converter scheme 130 is required to subsequently reconfigure converters from a blocked state to a de-blocked state, the controller carries a two-stage converter scheme reconfiguration as follows.

A first stage of the converter scheme reconfiguration initially involves deblocking the blocked first and second converters 32,34 and instantaneously increasing an operating power of the newly deblocked first and second converters 32,34 so that the fourth DC pole P4 is at a power level of 150MW. Meanwhile the operating power of the bipole converter scheme 130 is maintained at the total power level of 4500MW, which means that the operating power of the originally deblocked first and second converters 32,34 and the power level of the first, second and third DC poles P1,P2,P3 drop to 1450MW.

Thereafter, the first stage involves decreasing the operating power of the originally deblocked first and second converters 32,34 from its present power level to an intermediate power level of 1125 MW, and increasing an operating power of the newly deblocked first and second converters 32 from its present power level to the intermediate power level with the fastest ramp rate possible to minimise the risk of operating parameter violation. In this manner the total power level of the bipole converter scheme 130 is redistributed evenly among the deblocked converters 32,34 at the intermediate power level.

When modifying the operating powers of the first converters 32 to the intermediate power level, the controller 36 coordinates respective power ramp rates of the deblocked first and second converters 32,34 so that the deblocked first and second converters 32,34 simultaneously reach the intermediate power level while maintaining the operating power of the bipole converter scheme 130 at the total power level of 4500MW. Such coordination of the respective power ramp rates of the deblocked first and second converters 32,34 is preferably carried out in accordance with the permitted power ramp rate, the intermediate power level, and the number of originally deblocked converters. The permitted power ramp rate may be restricted by system power ramp rate capability and the operation of associated equipment such as tap changers.

This is followed by a second stage of the converter scheme reconfiguration which involves calculating the power order for each deblocked first and second converter 32,34 based on the target total power level of 6000MW and on converter power capability, before increasing the operating power of each deblocked first and second converter 32,34 from the intermediate power level to a power level of 1500MW such that the total power level of the bipole converter scheme 130 is increased to 6000MW. This results in each DC pole having a power level of 1500MW.

When increasing the operating power of each converter 32,34 to the power level of 1500MW, the controller 36 coordinates respective power ramp rates of the deblocked first and second converters 32,34 so that the deblocked first and second converters 32,34 simultaneously reach the power level of 1500MW. Such coordination of the respective power ramp rates of the deblocked first and second converters 32,34 is preferably carried out in accordance with the permitted power ramp rate, the number of converters, and converter power capability.

When the bipole converter scheme 130 is required to subsequently reconfigure converters from a de-blocked state to a blocked state, the controller carries a two-stage converter scheme reconfiguration as follows.

A first stage of the converter scheme reconfiguration initially involves decreasing the operating power of each of the deblocked first and second converters 32,34 from its present power level to an intermediate power level of 1125MW such that the total power level of the bipole converter scheme 130 is decreased to 4500MW.

When decreasing the operating powers of the first and second converters 32,34 to the intermediate power level, the controller 36 coordinates respective power ramp rates of the deblocked first and second converters 32,34 so that the deblocked first and second converters 32,34 simultaneously reach the intermediate power level. Such coordination of the respective power ramp rates of the deblocked first and second converters 32,34 is preferably carried out in accordance with the permitted power ramp rate, the number of converters, and the intermediate power level.

This is followed by a second stage of the converter scheme reconfiguration which involves increasing the operating power of the first and second converters 32,34 associated with the first, second and third DC poles P1, P2, P3 from the intermediate power level to a power level of 1450MW and decreasing the operating power of the first and second converter 32,34 associated with the fourth DC pole P4 from the intermediate power level to a power level of 150MW.

When modifying the operating powers of the first and second converters 32,34 from the intermediate power level, the controller 36 coordinates respective power ramp rates of the deblocked first and second converters 32,34 so that the deblocked first and second converters 32,34 simultaneously reach the respective target power levels while maintaining the operating power of the bipole converter scheme 130 at the total power level of 4500MW. Such coordination of the respective power ramp rates of the deblocked first and second converters 32,34 is preferably carried out in accordance with the permitted power ramp rate and the number of deblocked converters.

Thereafter, the second stage involves blocking the first and second converters 32,34 associated with the fourth DC pole P4. Since the controller 36 maintains the operating power of the bipole converter scheme 130 at the total power level of 4500MW, the total power level of 4500MW is redistributed to the remaining deblocked first and second converters 32,34 associated with the first, second and third DC poles P1, P2, P3.

The above sequence of the bipole converter scheme 130 can be automated to permit its performance through a single trigger, e.g. by pressing a single initiation button. This advantageously eliminates the need for operator intervention and thereby reduces the risk of maloperation, thus improving the efficiency and reliability of the bipole converter scheme 130.

The above sequence of the bipole converter scheme 130 permits the staggering of the blocking and deblocking of converters in order to enable the smooth start-up and shut-down of multiple converters in a manner that minimises any adverse impact on the associated AC networks 50 and enables smooth power regulation in the bipole converter scheme 130.

The redistribution of the total power level among the or each deblocked converter 32,34 when changing the total power level of the bipole converter scheme 130 not only minimises or eliminates the risk of violating the operating parameters of each DC pole but also enables optimisation of the power distribution between the converters 32,34 in order to optimize the utilisation and operation of the converters 32,34 to meet a wide range of requirements. Such requirements include, but are not limited to, converter losses, converter availability, converter life extension, reduced converter maintenance, and minimisation of the operation of associated equipment such as tap changers, switchgear, and filter switches.

The coordination of the respective power ramp rates of the deblocked first and second converters 32,34 is preferably carried out to minimise the duration during which the operating powers of the deblocked first and second converters 32,34 are ramped. This is to minimise the risk of one DC pole temporarily being at a higher power level than the other DC pole, which runs the risk of unbalance and violation of operating parameters.

It will be appreciated that each of the numerical values used to describe the above embodiments are merely chosen to help illustrate the working of the invention, and may be replaced by another suitable numerical value. It will be further appreciated that the topologies of the converter schemes are merely chosen to help illustrate the working of the invention, and may be replaced by other suitable topologies, according to the scope of the appended claims.

## Claims

1. A converter scheme (30) comprising a plurality of converters (32,34), the plurality of converters including at least one of
• at least one set of parallel-connected converters (32,34);
• a bipolar converter arrangement including a plurality of converters;
• a multi-terminal converter arrangement including a plurality of converters,
each converter (32,34) including a plurality of series-connected modules (58), each modules including switching elements controllable to operate each module to selectively provide a voltage source and to configure each converter to change between blocked and deblocked states, each converter (32,34) having a configurable output power level, the converter scheme (30) further including a controller (36) programmed to operate the converter scheme (30) at a total power level which is distributed among one or more converters (32,34) configured in a deblocked state,
**characterized in that** the controller (36) is programmed to reconfigure the converter scheme from a first total power level to a second total power level by carrying out a first stage of decreasing an operating power of at least one converter (32,34) in a deblocked state from a first power level to an intermediate power level, at least one converter being in a blocked state, and then carry out a second stage of increasing the operating power of the or each deblocked converter (32,34) from the intermediate power level to a second power level, wherein the controller (36) is further programmed such that:
(i) when the first total power level is lower than the second total power level, the first stage includes a first mode so as to reconfigure at least one further converter (32,34) among the at least one converter being in a blocked state from a blocked state to a deblocked state and then increase an operating power of the or each further converter (32,34) to the intermediate power level so that the total power level is redistributed among the deblocked converters (32,34) at the intermediate power level; and
(ii) when the first total power level is higher than the second total power level, the second stage includes a second mode so as to decrease the operating power of at least one selected of the deblocked converters (32,34) from the intermediate power level, at least one of the deblocked converter being not selected, and then reconfigure the or each selected converter (32,34) from a deblocked state to a blocked state so that the total power level is redistributed among the or each remaining deblocked converter (32,34) at the second power level.

2. A converter scheme (30) according to claim 1 wherein the controller (36) is programmed to increase an operating power of the or each further converter (32,34) to a non-zero power level immediately after reconfiguring the or each further converter (32,34) from a blocked state to a deblocked state during the first stage.

3. A converter scheme (30) according to any one of the preceding claims wherein the controller (36) is programmed to operate the converter scheme (30) at the first total power level during the first mode.

4. A converter scheme (30) according to any one of the preceding claims wherein the controller (36) is programmed to decrease an operating power of the or each selected converter (32,34) from the intermediate power level to a non-zero power level immediately before reconfiguring the or each selected converter (32,34) from a deblocked state to a blocked state during the second stage.

5. A converter scheme (30) according to any one of the preceding claims wherein the controller (36) is programmed to operate the converter scheme (30) at the second total power level during the second mode.

6. A converter scheme (30) according to any one of the preceding claims wherein the controller (36) is programmed to coordinate respective power ramp rates of multiple converters (32,34) configured in a deblocked state during the first stage so that the multiple deblocked converters (32,34) simultaneously reach the intermediate power level.

7. A converter scheme (30) according to any one of the preceding claims wherein the controller (36) is programmed to coordinate respective power ramp rates of multiple converters (32,34) configured in a deblocked state during the second stage so that the multiple deblocked converters (32,34) simultaneously reach the second power level.

8. A method of operating a converter scheme (30), the converter scheme (30) comprising a plurality of converters (32,34), the plurality of converters including at least one of
• at least one set of parallel-connected converters (32,34);
• a bipolar converter arrangement including a plurality of converters;
• a multi-terminal converter arrangement including a plurality of converters,
each converter (32,34) including a plurality of series-connected modules (58), each modules including switching elements controllable to operate each module to selectively provide a voltage source and to configure each converter to change between blocked and deblocked states, each converter (32,34) having a configurable output power level, the method comprising the step of:
operating the converter scheme (30) at a total power level which is distributed among one or more converters (32,34) configured in a deblocked state; and
**characterized in that** the method comprises the step of:
reconfiguring the converter scheme from a first total power level to a second total power level by carrying out a first stage of decreasing an operating power of at least one converter (32,34) in a deblocked state from a first power level to an intermediate power level, at least one converter being in a blocked state, and then carrying out a second stage of increasing the operating power of the or each deblocked converter (32,34) from the intermediate power level to a second power level,
wherein:
(i) when the first total power level is lower than the second total power level, the first stage includes a first mode so as to reconfigure at least one further converter (32,34) among the at least one converter being in a blocked state from a blocked state to a deblocked state and then increase an operating power of the or each further converter (32,34) to the intermediate power level so that the total power level is redistributed among the deblocked converters (32,34) at the intermediate power level; and
(ii) when the first total power level is higher than the second total power level, the second stage includes a second mode so as to decrease the operating power of at least one selected of the deblocked converters (32,34) from the intermediate power level, at least one of the deblocked converter being not selected, and then reconfigure the or each selected converter (32,34) from a deblocked state to a blocked state so that the total power level is redistributed among the or each remaining deblocked converter (32,34) at the second power level.

## Patentansprüche

1. Wandlerschema (30), das eine Vielzahl von Wandlern (32, 34) umfasst, wobei die Vielzahl von Wandlern mindestens eines einschließt aus
• mindestens einem Satz parallelgeschalteter Wandler (32, 34);
• einer bipolaren Wandleranordnung, die eine Vielzahl von Wandlern einschließt;
• einer Wandleranordnung mit mehreren Anschlüssen, die eine Vielzahl von Wandlern einschließt,
wobei jeder Wandler (32, 34) eine Vielzahl von in Reihe geschalteten Modulen (58) einschließt, wobei jedes Modul Schaltelemente einschließt, die gesteuert werden können, um jedes Modul so zu betreiben, dass es selektiv eine Spannungsquelle bereitstellt, und jeden Wandler zu konfigurieren, um zwischen einem verblockten und einem unverblockten Zustand zu wechseln, wobei jeder Wandler (32, 34) einen konfigurierbaren Ausgangsleistungspegel aufweist, wobei das Wandlerschema (30) weiter eine Steuerung (36) einschließt, die so programmiert ist, dass sie das Wandlerschema (30) auf einem Gesamtleistungspegel betreibt, der auf einen oder mehrere in einem unverblockten Zustand konfigurierte Wandler (32, 34) verteilt ist,
**dadurch gekennzeichnet, dass** die Steuerung (36) so programmiert ist, dass sie das Wandlerschema von einem ersten Gesamtleistungspegel auf einen zweiten Gesamtleistungspegel umkonfiguriert, indem sie eine erste Stufe des Absenkens einer Betriebsleistung mindestens eines Wandlers (32, 34) in einem unverblockten Zustand von einem ersten Leistungspegel auf einen Zwischenleistungspegel ausführt, wobei sich mindestens ein Wandler in einem verblockten Zustand befindet, und dann eine zweite Stufe des Erhöhens der Betriebsleistung des oder jedes unverblockten Wandlers (32, 34) vom Zwischenleistungspegel auf einen zweiten Leistungspegel ausführt, wobei die Steuerung (36) weiter so programmiert ist, dass:
(i) wenn der erste Gesamtleistungspegel niedriger ist als der zweite Gesamtleistungspegel, die erste Stufe einen ersten Modus einschließt, um mindestens einen weiteren Wandler (32, 34) unter dem mindestens einen, sich in einem verblockten Zustand befindenden Wandler von einem verblockten Zustand auf einen unverblockten Zustand umzukonfigurieren und dann eine Betriebsleistung des oder jedes weiteren Wandlers (32, 34) auf den Zwischenleistungspegel zu erhöhen, sodass der Gesamtleistungspegel auf dem Zwischenleistungspegel auf die unverblockten Wandler (32, 34) umverteilt wird; und
(ii) wenn der erste Gesamtleistungspegel höher ist als der zweite Gesamtleistungspegel, die zweite Stufe einen zweiten Modus einschließt, um die Betriebsleistung mindestens eines ausgewählten aus den unverblockten Wandlern (32, 34) vom Zwischenleistungspegel abzusenken, wobei mindestens einer der unverblockten Wandler nicht ausgewählt wird, und dann den oder jeden ausgewählten Wandler (32, 34) von einem unverblockten Zustand auf einen verblockten Zustand umzukonfigurieren, sodass der Gesamtleistungspegel auf dem zweiten Leistungspegel auf den oder jeden verbleibenden unverblockten Wandler (32, 34) umverteilt wird.

2. Wandlerschema (30) nach Anspruch 1, wobei die Steuerung (36) so programmiert ist, dass sie in der ersten Stufe unmittelbar nach dem Umkonfigurieren des oder jedes weiteren Wandlers (32, 34) von einem verblockten Zustand auf einen unverblockten Zustand eine Betriebsleistung des oder jedes weiteren Wandlers (32, 34) auf einen Leistungspegel von ungleich null erhöht.

3. Wandlerschema (30) nach einem der vorstehenden Ansprüche, wobei die Steuerung (36) so programmiert ist, dass sie das Wandlerschema (30) im ersten Modus auf dem ersten Gesamtleistungspegel betreibt.

4. Wandlerschema (30) nach einem der vorstehenden Ansprüche, wobei die Steuerung (36) so programmiert ist, dass sie in der zweiten Stufe unmittelbar vor dem Umkonfigurieren des oder jedes ausgewählten Wandlers (32, 34) von einem unverblockten Zustand auf einen verblockten Zustand eine Betriebsleistung des oder jedes ausgewählten Wandlers (32, 34) vom Zwischenleistungspegel auf einen Leistungspegel von ungleich null absenkt.

5. Wandlerschema (30) nach einem der vorstehenden Ansprüche, wobei die Steuerung (36) so programmiert ist, dass sie das Wandlerschema (30) im zweiten Modus auf dem zweiten Gesamtleistungspegel betreibt.

6. Wandlerschema (30) nach einem der vorstehenden Ansprüche, wobei die Steuerung (36) so programmiert ist, dass sie jeweilige Leistungsgradienten mehrerer in einem unverblockten Zustand konfigurierter Wandler (32, 34) in der ersten Stufe so koordiniert, dass die mehreren unverblockten Wandler (32, 34) gleichzeitig den Zwischenleistungspegel erreichen.

7. Wandlerschema (30) nach einem der vorstehenden Ansprüche, wobei die Steuerung (36) so programmiert ist, dass sie jeweilige Leistungsgradienten mehrerer in einem unverblockten Zustand konfigurierter Wandler (32, 34) in der zweiten Stufe so koordiniert, dass die mehreren unverblockten Wandler (32, 34) gleichzeitig den zweiten Leistungspegel erreichen.

8. Verfahren zum Betreiben eines Wandlerschemas (30), wobei das Wandlerschema (30) eine Vielzahl von Wandlern (32, 34) umfasst, wobei die Vielzahl von Wandlern mindestens eines einschließt aus
• mindestens einem Satz parallelgeschalteter Wandler (32, 34);
• einer bipolaren Wandleranordnung, die eine Vielzahl von Wandlern einschließt;
• einer Wandleranordnung mit mehreren Anschlüssen, die eine Vielzahl von Wandlern einschließt,
wobei jeder Wandler (32, 34) eine Vielzahl von in Reihe geschalteten Modulen (58) einschließt, wobei jedes Modul Schaltelemente einschließt, die gesteuert werden können, um jedes Modul so zu betreiben, dass es selektiv eine Spannungsquelle bereitstellt, und jeden Wandler zu konfigurieren, um zwischen einem verblockten und einem unverblockten Zustand zu wechseln, wobei jeder Wandler (32, 34) einen konfigurierbaren Ausgangsleistungspegel aufweist, wobei das Verfahren den Schritt umfasst des:
Betreibens des Wandlerschemas (30) auf einem Gesamtleistungspegel, der auf einen oder mehrere in einem unverblockten Zustand konfigurierte Wandler (32, 34) verteilt ist; und
**dadurch gekennzeichnet, dass** das Verfahren den Schritt umfasst des:
Umkonfigurierens des Wandlerschemas von einem ersten Gesamtleistungspegel auf einen zweiten Gesamtleistungspegel durch Ausführen einer ersten Stufe des Absenkens einer Betriebsleistung mindestens eines Wandlers (32, 34) in einem unverblockten Zustand von einem ersten Leistungspegel auf einen Zwischenleistungspegel, wobei sich mindestens ein Wandler in einem verblockten Zustand befindet, und dann Ausführens einer zweiten Stufe des Erhöhens der Betriebsleistung des oder jedes unverblockten Wandlers (32, 34) vom Zwischenleistungspegel auf einen zweiten Leistungspegel,
wobei:
(i) wenn der erste Gesamtleistungspegel niedriger ist als der zweite Gesamtleistungspegel, die erste Stufe einen ersten Modus einschließt, um mindestens einen weiteren Wandler (32, 34) unter dem mindestens einen, sich in einem verblockten Zustand befindenden Wandler von einem verblockten Zustand auf einen unverblockten Zustand umzukonfigurieren und dann eine Betriebsleistung des oder jedes weiteren Wandlers (32, 34) auf den Zwischenleistungspegel zu erhöhen, sodass der Gesamtleistungspegel auf dem Zwischenleistungspegel auf die unverblockten Wandler (32, 34) umverteilt wird; und
(ii) wenn der erste Gesamtleistungspegel höher ist als der zweite Gesamtleistungspegel, die zweite Stufe einen zweiten Modus einschließt, um die Betriebsleistung mindestens eines ausgewählten aus den unverblockten Wandlern (32, 34) vom Zwischenleistungspegel abzusenken, wobei mindestens einer der unverblockten Wandler nicht ausgewählt wird, und dann den oder jeden ausgewählten Wandler (32, 34) von einem unverblockten Zustand auf einen verblockten Zustand umzukonfigurieren, sodass der Gesamtleistungspegel auf dem zweiten Leistungspegel auf den oder jeden verbleibenden unverblockten Wandler (32, 34) umverteilt wird.

## Revendications

1. Plan de conversion (30) comprenant une pluralité de convertisseurs (32, 34), la pluralité de convertisseurs incluant au moins l'un parmi
• au moins un ensemble de convertisseurs connectés en parallèle (32, 34) ;
• un agencement de convertisseurs bipolaires incluant une pluralité de convertisseurs ;
• un agencement de convertisseurs à plusieurs bornes incluant une pluralité de convertisseurs,
chaque convertisseur (32, 34) incluant une pluralité de modules connectés en série (58), chaque module incluant des éléments de commutation pouvant être commandés pour faire fonctionner chaque module pour fournir sélectivement une source de tension et pour configurer chaque convertisseur pour changer entre des états bloqué et débloqué, chaque convertisseur (32, 34) présentant un niveau de sortie de puissance configurable, le plan de conversion (30) incluant en outre un dispositif de commande (36) programmé pour faire fonctionner le plan de conversion (30) à un niveau de puissance totale qui est distribué parmi un ou plusieurs convertisseurs (32, 34) configurés dans un état débloqué,
**caractérisé en ce que** le dispositif de commande (36) est programmé pour reconfigurer le plan de conversion d'un premier niveau de puissance totale à un second niveau de puissance totale en réalisant un premier stade de réduction d'une puissance de fonctionnement d'au moins un convertisseur (32, 34) dans un état débloqué d'un premier niveau de puissance à un niveau de puissance intermédiaire, au moins un convertisseur étant dans un état débloqué, et ensuite réaliser un second stade d'augmentation de la puissance de fonctionnement du ou de chaque convertisseur débloqué (32, 34) du niveau de puissance intermédiaire à un second niveau de puissance, dans lequel le dispositif de commande (36) est en outre programmé de telle sorte que :
(i) lorsque le premier niveau de puissance totale est inférieur au second niveau de puissance totale, le premier stade inclut un premier mode de façon à reconfigurer au moins un convertisseur (32, 34) supplémentaire parmi l'au moins un convertisseur qui est dans un état bloqué d'un état bloqué à un état débloqué et ensuite augmenter une puissance de fonctionnement du ou de chaque convertisseur (32, 34) supplémentaire au niveau de puissance intermédiaire de sorte que le niveau de puissance totale est redistribué parmi les convertisseurs (32, 34) débloqués au niveau de puissance intermédiaire ; et
(ii) lorsque le premier niveau de puissance totale est supérieur au second niveau de puissance totale, le second stade inclut un second mode de façon à réduire la puissance de fonctionnement d'au moins un sélectionné des convertisseurs (32, 34) débloqués du niveau de puissance intermédiaire, et au moins un du convertisseur débloqué n'étant pas sélectionné, et ensuite reconfigurer le ou chaque convertisseur (32, 34) sélectionné d'un état débloqué à un état bloqué de sorte que le niveau de puissance totale est redistribué parmi le ou chaque convertisseur (32, 34) débloqué restant au second niveau de puissance.

2. Plan de conversion (30) selon la revendication 1, dans lequel le dispositif de commande (36) est programmé pour augmenter une puissance de fonctionnement du ou de chaque convertisseur (32, 34) supplémentaire à un niveau de puissance non égale à zéro après une reconfiguration du ou de chaque convertisseur (32, 34) supplémentaire d'un état bloqué à un état débloqué pendant le premier stade.

3. Plan de conversion (30) selon l'une quelconque des revendications précédentes, dans lequel le dispositif de commande (36) est programmé pour faire fonctionner le plan de conversion (30) au premier niveau de puissance totale pendant le premier mode.

4. Plan de conversion (30) selon l'une quelconque des revendications précédentes, dans lequel le dispositif de commande (36) est programmé pour réduire une puissance de fonctionnement du ou de chaque convertisseur (32, 34) sélectionné du niveau de puissance intermédiaire à un niveau de puissance non égale à zéro immédiatement avant de reconfigurer le ou chaque convertisseur (32, 34) sélectionné d'un état débloqué à un état bloqué pendant le second stade.

5. Plan de conversion (30) selon l'une quelconque des revendications précédentes, dans lequel le dispositif de commande (36) est programmé pour faire fonctionner le plan de conversion (30) au second niveau de puissance totale pendant le second mode.

6. Plan de conversion (30) selon l'une quelconque des revendications précédentes, dans lequel le dispositif de commande (36) est programmé pour coordonner des taux de rampe de puissance respectifs de multiples convertisseurs (32, 34) configurés dans un état débloqué pendant le premier stade de sorte que les multiples convertisseurs (32, 34) débloqués atteignent simultanément le niveau de puissance intermédiaire.

7. Plan de conversion (30) selon l'une quelconque des revendications précédentes, dans lequel le dispositif de commande (36) est programmé pour coordonner des taux de rampe de puissance respectifs de multiples convertisseurs (32, 34) configurés dans un état débloqué pendant le second stade de sorte que les multiples convertisseurs (32, 34) débloqués atteignent simultanément le second niveau de puissance.

8. Procédé de fonctionnement d'un plan de conversion (30), le plan de conversion (30) comprenant une pluralité de convertisseurs (32, 34), la pluralité de convertisseurs incluant au moins l'un parmi
• au moins un ensemble de convertisseurs connectés en parallèle (32, 34) ;
• un agencement de convertisseurs bipolaires incluant une pluralité de convertisseurs ;
• un agencement de convertisseurs à plusieurs bornes incluant une pluralité de convertisseurs,
chaque convertisseur (32, 34) incluant une pluralité de modules connectés en série (58), chaque module incluant des éléments de commutation pouvant être commandés pour faire fonctionner chaque module pour fournir sélectivement une source de tension et pour configurer chaque convertisseur pour changer entre des états bloqué et débloqué, chaque convertisseur (32, 34) présentant un niveau de puissance de sortie configurable, le procédé comprenant l'étape consistant à :
faire fonctionner le plan de conversion (30) à un niveau de puissance totale qui est distribué parmi un ou plusieurs convertisseurs (32, 34) configurés dans un état débloqué ; et
**caractérisé en ce que** le procédé comprend l'étape consistant à :
reconfigurer le plan de conversion d'un premier niveau de puissance totale à un second niveau de puissance totale en réalisant un premier stade de réduction d'une puissance de fonctionnement d'au moins un convertisseur (32, 34) dans un état débloqué d'un premier niveau de puissance à un niveau de puissance intermédiaire, au moins un convertisseur étant dans un état bloqué, et en réalisant ensuite un second stade d'augmentation de la puissance de fonctionnement du ou de chaque convertisseur (32, 34) débloqué du niveau de puissance intermédiaire à un second niveau de puissance,
dans lequel :
(i) lorsque le premier niveau de puissance totale est inférieur au second niveau de puissance totale, le premier stade inclut un premier mode de façon à reconfigurer au moins un convertisseur (32, 34) supplémentaire parmi l'au moins un convertisseur qui est dans un état bloqué d'un état bloqué à un état débloqué et ensuite augmenter une puissance de fonctionnement du ou de chaque convertisseur (32, 34) supplémentaire au niveau de puissance intermédiaire de sorte que le niveau de puissance totale est redistribué parmi les convertisseurs (32, 34) débloqués au niveau de puissance intermédiaire ; et
(ii) lorsque le premier niveau de puissance totale est supérieur au second niveau de puissance totale, le second stade inclut un second mode de façon à réduire la puissance de fonctionnement d'au moins un sélectionné des convertisseurs (32, 34) débloqués du niveau de puissance intermédiaire, et au moins un du convertisseur débloqué n'étant pas sélectionné, et ensuite reconfigurer le ou chaque convertisseur (32, 34) sélectionné d'un état débloqué à un état bloqué de sorte que le niveau de puissance totale est redistribué parmi le ou chaque convertisseur (32, 34) débloqué restant au second niveau de puissance.
